# EUROPÄISCHE PATENTSCHRIFT

(11) **EP 1 612 527 B1**
(45) Veröffentlichungstag und Bekanntmachung des Hinweises auf die Patenterteilung: **26.09.2007**
(21) Anmeldenummer: 04015458.5
(22) Anmeldetag: 01.07.2004
(51) Int. Cl.: G01J 3/28, G01N 21/88, G01N 21/31

(54) **Vorrichtung zur bildgebenden spektroskopischen Erfassung von Gegenständen charakterisierenden Parametern**
System for the spectroscopical image detection of objects characterising parameters
Appareil d'imagerie spectroscopique pour la détection de paramètres caracteristiques d'objets

(43) Veröffentlichungstag der Anmeldung: 04.01.2006
(73) Patentinhaber: Zeutec Opto-Elektronik GmbH, 24768 Rendsburg (DE)
(72) Erfinder: Hoyer, Hartmut, 24114 Kiel (DE); Malki, Oliver Dr., 24214 Revensdorf (DE); Hembd, Daniel, 24787 Fockbek (DE)
(74) Vertreter: Niedmers, Ole

(56) Entgegenhaltungen:
- WO-A-02/18916
- WO-A-03/066334
- US-A- 4 134 683
- US-A- 2002 135 760
- US-A1- 2002 090 144
- US-A1- 2003 086 091
- US-A1- 2004 080 829
- US-B1- 6 590 648

## Beschreibung

Die Erfindung betrifft eine Vorrichtung zur bildgebenden spektroskopischen Erfassung von von Gegenständen charakterisierenden Parametern, insbesondere von Vorgängen, Abläufen und Gegenständen und deren Analyse.

Aus der US-A-2002 0 090 144 sind ein Verfahren und eine Vorrichtung bekannt, mit dem bzw. der mittels einer Vielzahl von Kanälen für jeden Bildpunkt eines zu erfassenden Bildes Farbdaten aufgefangen werden. Das Ziel des bekannten Verfahrens bzw. der bekannten Vorrichtung ist es, die bei einer digitalen Bildverarbeitung an sich anfallenden großen Datenmengen, was bis dahin zu einer Überbelastung bzw. Übersteuerung der vorhandenen Datenspeicher geführt hat, zu vermeiden. Das bekannte Verfahren bzw. die bekannte Vorrichtung machen sich dabei zu eigen, daß festgestellt wurde, daß es für jedes einzelne erfaßte Objekt in einem Bild oder für jedes Bild insgesamt eine Menge oder mehrere Mengen von Kanälen gibt, die eine optimal niedrige Anzahl von Kanälen aufweisen, und daß es eine dazugehörige Transformationsfunktion gibt, die verwendet werden kann, um daraus eine genaue spektrale Rekonstruktion des Objektes oder des Bildes auszuführen. Dadurch ist es möglich, die Speichergröße gegenüber auf dem dortigen technologischen Feld bisher dafür verwendeten Systeme erheblich zu vermindern.

Aus der WO-A-02 18 916 ist eine Speichereinheit in Form eines "field programmable gate array" FPGA bekannt, die in einem Kalorimeter Verwendung findet. Hier hat das "field programmable gate array" einen eng gefaßten, definierten Aufgabenbereich, nämlich eine Signalverarbeitung für eine Farbmetrik vorzunehmen, die herstellerseitig in dem "field programmable gate array" vorgegeben wird. Faktisch ist vom Endbenutzer des bekannten Kalorimeters eine Einflußnahme auf die Funktion, d.h. die Signalverarbeitung an sich, nicht möglich.

Im Bereich der Analytik aber auch im Bereich der Überwachung von Produktionsprozessen und der Herstellung von Gegenständen in der gewerblichen Wirtschaft, wurden bisher u.a. klassische Spektrometer verwendet. Mit diesen ist es möglich, die gesetzmäßigen Zusammenhänge in den für jede Substanz charakteristischen Spektren zu ermitteln und diese bspw. zur Feststellung der qualitativen Zusammensetzung der zu untersuchenden Substanz aus ihren molekularen Bestandteilen heranzuziehen. Darüber hinaus ist es mit Spektrometern möglich, den prozentualen Anteil der einzelnen Bestandteile eines Gemisches aus der spektralen Intensität festzustellen und z.B. für den Bereich der Diagnostik hinsichtlich der Zusammensetzung und Zustandsparameter wie Druck, Temperatur, Ionisationsgrad zu ermitteln.

Die Spektroskopie findet somit schon bisher in weiten Bereichen nicht nur im Labor, sondern auch in der industriellen Überwachung von Verfahrensabläufen und Herstellungsprozessen Anwendung, s.o. Dabei finden bspw. spektroskopische Einrichtungen bzw. Einheiten, die kurz etwas ungenau Spektrometer genannt werden, Anwendung, wie sie bspw, aus dem europäischen Patent gem, der EP-B-0 635 138 bekannt sind.

Mit einer derartigen spektrographischen Einheit ist im Zusammenwirken mit einer vorgeschalteten optischen Erfassungseinheit und einer entsprechend aufgebauten und konfigurierten elektrischen Steuer- und Regeleinrichtung im Zusammenwirken mit einer mit in dieser integrierten oder gesondert aufgebauten und damit verbundenen Recheneinheit die sogen, bildgebende spektroskopische Erfassung von von Gegenständen charakterisierenden Parametern möglich. Mit derartigen bildgebenden spektrometrischen Erfassungssystemen ist es möglich, gleichzeitig räumliche und spektrale Informationen im Hinblick auf den betrachteten Gegenstand aufzunehmen. Das bildgebende spektroskopische Erfassungssystem kann, anders als bspw. klassische Spektrometer, s.o., in einem großen Wellenbereich gleichzeitig eine große Anzahl von spektralen und räumlichen Kanälen, ohne bewegliche mechanische Teile erfassen. Bei den gattungsgemäßen bekannten spektroskopischen Erfassungssystemen, die aus konventionell aufgebauten Einzelkomponenten bestehen, sind allerdings die damit erreichbaren gesamten Bauformen der Vorrichtung derart empfindlich und komplex und aufgrund ihrer Komplexität sehr störanfällig sowie schwer justierbar, daß sie sich für einen unmittelbaren aktiven Einsatz in einen Herstellungsprozeß von Gegenständen, d.h. bspw. zu deren Überwachung und ggf. auch Analyse, nicht eignen. Zudem sind bekannte Vorrichtungen zur bildgebenden spektroskopischen Erfassung von Gegenständen in bezug auf Aufbau und Steuerung genau auf die jeweils zu erfassende Aufgabe hin konfiguriert, so daß bei einer Änderung der mit dem bildgebenden, spektroskopischen Erfassungssystem faktisch eine Neukonfiguration der gesamten Systemkomponenten einschl, der Steuerung des Systems nötig ist, so daß dem Anwender derartiger Systeme nur die völlige Neukonfiguration übrig bleibt, um seine speziellen Vorgänge bzw. Abläufe im Hinblick auf die diese charakterisierenden Parameter aufzubauen. Das geht einher mit der völligen Neugestaltung von Programmen zum Verfahrensablauf, dem die gattungsgemäße Vorrichtung für den speziellen gewünschten Zweck ausführen soll.

Es ist somit Aufgabe der vorliegenden Erfindung, eine Vorrichtung der eingangs genannten Art zu schaffen, mit der den Anwendern derartiger Vorrichtungen zur Lösung von deren speziellen Überwachungs- und Analyseaufgaben ein Werkzeug an die Hand gegeben wird, das in seiner Grundkonfiguration mit allen für die erfindungsgemäße Funktion notwendigen mechanischen, optischen sowie elektrischen und elektronischen Komponenten versehen ist und somit vom Anwender lediglich im Hinblick auf seine speziellen Erfordernisse in bezug auf eine geeignete Steuerung, Regelung und Erfassung der Daten auf einfache Weise konfiguriert zu werden braucht, wobei die Vorrichtung einfach im Aufbau und somit auch kostengünstig für die verschiedensten Anwendungszwecke bereitgestellt und auch einfach angewendet werden kann.

Gelöst wird die Aufgabe gem, der Erfindung durch eine Vorrichtung zur bildgebenden, spektroskopischen Erfassung von von Gegenständen charakterisierenden Parametern, insbesondere von Vorgängen, Abläufen und Gegenständen und deren Analyse, umfassend wenigstens eine optische Erfassungseinheit, wenigstens eine spektrographische Einheit, wenigstens ein optisch sensitives Detektorelement, das wellenlängenspezifisch und austauschbar ausgebildet ist, auf das ein in der spektroskopischen Einheit gebildetes Strahlenspektrum geleitet wird, sowie eine elektronische Steuer- und Regeleinrichtung, mit der die Erfassungseinheit, die spektrographische Einheit sowie das Detektorelement in bezug auf die spektroskopische Erfassungsfunktion der Vorrichtung zu deren Steuerung und/oder Regelung verknüpft sind, wobei die elektronische Steuer- und Regeleinheit eine Programmeinheit umfaßt, in die ein anwendungsspezifischer Steuer- und/oder Regelalgorithmus einschreibbar ist, und daß eine Speichereinheit vorgesehen ist, die wenigstens teilweise in Form eines "field programmable gate array" FPGA ausgebildet ist, in das anwenderseitig der gewünschte Steuer- und/oder Regelalgorithmus für den bestimmungsgemäßen Betrieb der Vorrichtung sowie die Anpassung an das verwendete optisch-sensitive Detektorelement einschreibbar ist.

Die Speichereinheit kann wenigstens teilweise als Programmspeicher dienen, teilweise aber auch als Datenspeicher zur Speicherung der mit der Vorrichtung selbst beim bestimmungsgemäßen Betrieb erfaßten Daten.

Die "field programmable gate arrays" gestatten es, für die unterschiedlichen optisch-sensitiven Detektorelemente, die für die verschiedenen zu erfassenden Wellenlängenbereiche nötig sind, für die somit bisher jeweils eine eigene elektronische Schaltung entwickelt und bereitgestellt werden mußte, was aufwendig und kostenträchtig ist, unterschiedliche elektronische Schaltkreise, Bauelemente usw. zu realisieren. Dazu brauchen die FPGAs lediglich den unterschiedlichen Anforderungen entsprechend modifiziert zu werden. Die Modifizierung geschieht dabei allein durch das Laden bzw. den Austausch von Programmen.

Im optischen Detektorelement werden die von der spektroskopischen Einheit gelieferten optischen Signale in elektrische umgewandelt und in der elektronischen Steuer- und Regeleinrichtung aufbereitet und verarbeitet. Im Hinblick auf die jeweiligen unterschiedlich zu erfassenden optischen Wellenlängenbereiche ist die Vorrichtung derart ausgebildet, daß die optischen Detektorelemente wellenlängenspezifisch ausgebildet sind. Die Detektorelemente sind somit speziell auf den zu erfassenden Wellenlängenbereich abgestimmt, d.h. sie sind selektiv für diesen Bereich und können, falls ein anderer Wellenlängenbereich erfaßt werden soll, gegen ein anderes, das in diesem Bereich selektiv ist, ausgetauscht werden. Grundsätzlich ist mittels der erfindungsgemäßen Vorrichtung die Erfassung von UV-, VIS- und NIR-Wellenlängenbereichen möglich.

Der Vorteil der erfindungsgemäßen Lösung besteht im wesentlichen darin, daß mittels des individuell zur Lösung der speziellen Erfassungsaufgabe der Regel- und Steueralgorithmus geladen werden kann, grundsätzlich aber weitere darüber hinausgehende Maßnahmen durch den speziellen Anwender zur Lösung seiner speziellen Erfassungsaufgabe nicht nötig ist. Es kann gesagt werden, daß sich durch die erfindungsgemäße Lösung die individuelle Anpassung an spezielle spektroskopische Erfassungsaufgaben mit der erfindungsgemäßen Vorrichtung auf eine entsprechende Anpassung des Steuer- und/oder Regelalgorithmus und dessen Einschreiben in eine Programmeinheit der elektronischen Steuer- und Regeleinheit reduziert. Da die Vorrichtung, wie schon dargelegt, im Prinzip mit allen Komponenten versehen ist, die zum bestimmungsgemäßen Betrieb der Vorrichtung erforderlich sind, ist die Vorrichtung nach dem Einschreiben des Steuer- und/oder Regelalgorithmus faktisch auch sofort betriebsbereit.

Elektronische Komponenten und ganze Elektroniksysteme lassen sich zu diesem Zweck mittels standardisierter Sprachen, bspw. VHDL, beschreiben, in eine für die FPGAs lesbare Form umwandeln und schließlich auf den FPGAs installieren.

Ein weiterer Vorteil, der sowohl für die Herstellungsseite der erfindungsgemäßen Vorrichtung als auch für den Anwender der Vorrichtung gilt, ist der, daß nicht nur Elektronikkomponenten bzw. -systeme sondern auch Datenverarbeitungsprogramme und somit die Auswertung der mit der Vorrichtung erfaßten Daten wenigstens teilweise und die Kommunikation mit anderen Einrichtungen auf den FPGAs laden lassen. Damit kann der Anwender der Vorrichtung alle für seine Anwendungen notwendigen Daten, Meßergebnisse und sonstige zu erfassende Größen direkt auf den FPGAs berechnen lassen und die Übertragung auf periphere Systeme auf diese Daten und Größen, die berechnet worden sind, beschränken.

Mittels dieser FPGAs ist es ebenfalls möglich, dem Anwender der Vorrichtung eine einfache Möglichkeit an die Hand zu geben, im Hinblick auf die von diesem für die Vorrichtung vorgesehene spezielle Aufgabe ein geeignetes Werkzeug an die Hand zu geben, um standardisierte Hardwarebeschreibungssprachen verwenden zu können.

Gem. einer weiteren anderen vorteilhaften Ausführungsform umfaßt die elektronische Steuer- und/oder Regeleinheit eine gesonderte Recheneinheit, in der wenigstens die vom Detektorelement gelieferten Daten aufbereitet und/oder komprimiert und/oder zur Weiterverarbeitung an von der Vorrichtung abgesetzte, d.h. periphere Rechen- und/oder Speichereinheiten, geleitet werden. Die abgesetzten Rechen- und/oder Speichereinheiten können normale externe Rechner sein, wobei prinzipiell die Vorrichtung aber ohne äußere Rechner- und Speichereinheiten bestimmungsgemäß in vollem Umfange betriebsfähig ist.

Aufgrund der Recheneinheit sowie der Programm- und Datenspeicher ist die Vorrichtung in der Lage, selbst extrem hohe Datenmengen, wie sie in der bildgebenden Spektroskopie anfallen, faktisch in Echtzeit zu verarbeiten. Über die in der Speichereinheit gespeicherten Daten können der Recheneinheit Referenzdaten und Kalibrationsdaten zur Verfügung gestellt werden, was sowohl im Rahmen der Herstellung der erfindungsgemäßen Vorrichtung als auch im Rahmen der Anwendung der Vorrichtung gilt.

Die Recheneinheit selbst kann dabei derart aufgebaut bzw. konfiguriert sein, daß sie wenigstens teilweise Teil der Speichereinheit ist.

Um bspw. UV-Strahlen mit dem Detektorelement erfassen zu können, ist bspw. vorzugsweise das Detektorelement aus wenigstens einem CMOS-Element ausgebildet, mit dem eine um zwei Zehnerpotenzen höhere Empfindlichkeit gegenüber bekannten Techniken in diesem Wellenlängenbereich erreichbar ist. Es sind grundsätzlich aber auch andere geeignete Elemente, die andere Techniken nutzen, für die Ausbildung von Detektorelementen heranziehbar.

Vorzugsweise ist das Detektorelement für die Erfassung von Strahlen im NIR-Wellenlängenbereich aus wenigstens einem HgCdTe-Element gebildet, wobei auch hier andere geeignete Elemente, die andere Techniken nutzen, für die Ausbildung von Detektorelementen herangezogen werden können.

Gem, einer weiteren vorteilhaften Ausgestaltung der Vorrichtung umfaßt diese eine Anzeigeeinheit und/oder einen Monitor, mit dem wenigstens die Darstellung der Steuer-, Regel- und Datenparameter möglich ist, wobei diese Anzeigeeinheit bzw. der Monitor als sogen. "Touch Screen" ausgebildet sein kann. Über die Anzeigeeinheit bzw. den Monitor können faktisch alle Status-Informationen der Vorrichtung sowie alle Steuer-, Regel- und Datenparameter dargestellt und ggf. auch geändert, korrigiert und bearbeitet werden. In der Grundform der erfindungsgemäßen Vorrichtung wird die Anzeigeeinheit (Bildschirm) eines Rechners, mit dem die Vorrichtung in Verbindung steht, zur Darstellung der Statusinformationen sowie der Steuer-, Regel-, und Datenparameter genutzt.

Wie oben schon dargestellt, können periphere Rechen- und/oder Speichereinheiten mit der Vorrichtung verbunden werden, d.h. entweder zur Unterstützung der Funktion der Vorrichtung selbst oder zur Weiterverarbeitung der von der Vorrichtung gelieferten Daten oder auch zur Lieferung von Daten in die Vorrichtung, bspw. zur völligen oder teilweisen Steuerung der Vorrichtung von außen. Aus diesem Grunde ist es sehr vorteilhaft, die Vorrichtung derart weiterzubilden, daß diese wenigstens eine Schnittstelle aufweist, über die die Vorrichtung in beiden Richtungen mit peripheren Einrichtungen kommunizieren kann. Diese Schnittstelle bzw. diese Schnittstellen können in Form der den allgemein, in der Informationstechnik bekannten Schnittstellen ausgebildet sein, bspw. nach RS 232, USB, Ethernet usw. Es können auch eine Mehrzahl von Schnittstellen in der Vorrichtung vorgesehen sein, die alle nach anderen Schnittstellenprinzipien aufgebaut sind, so daß ohne weitere Eingriffe die Vorrichtung universell über verschieden konfigurierte und funktionierende Schnittstellen mit peripheren Einrichtungen verbunden werden kann.

Schließlich ist es außerordentlich vorteilhaft, daß die Vorrichtung derart ausgebildet ist, daß wenigstens die spektrographische Einheit und/oder die optische Erfassungseinheit und/oder die Detektoreinheit und/oder die Steuer- und Regeleinrichtung als modular aufgebaute Elemente ausgebildet sind. Dieser modulare Aufbau der Vorrichtung gestattet es, daß letztlich die Vorrichtung in ihrer für die betreffende spezifische Messung, Überwachung, Kontrolle und Regelung industrieller Fertigungsprozesse mittels der erfindungsgemäßen Vorrichtung lediglich im Hinblick darauf modular zusammengestellt zu werden braucht, wobei die voraufgeführten Elemente pro Vorrichtung, je nach gewünschter Konfiguration und gewünschter Ausbaustufe, auch mehrfach vorgesehen sein können.

Die Erfindung wird nun unter Bezugnahme auf die nachfolgenden schematischen Zeichnungen anhand eines Ausführungsbeispieles im einzelnen beschrieben. Darin zeigen:

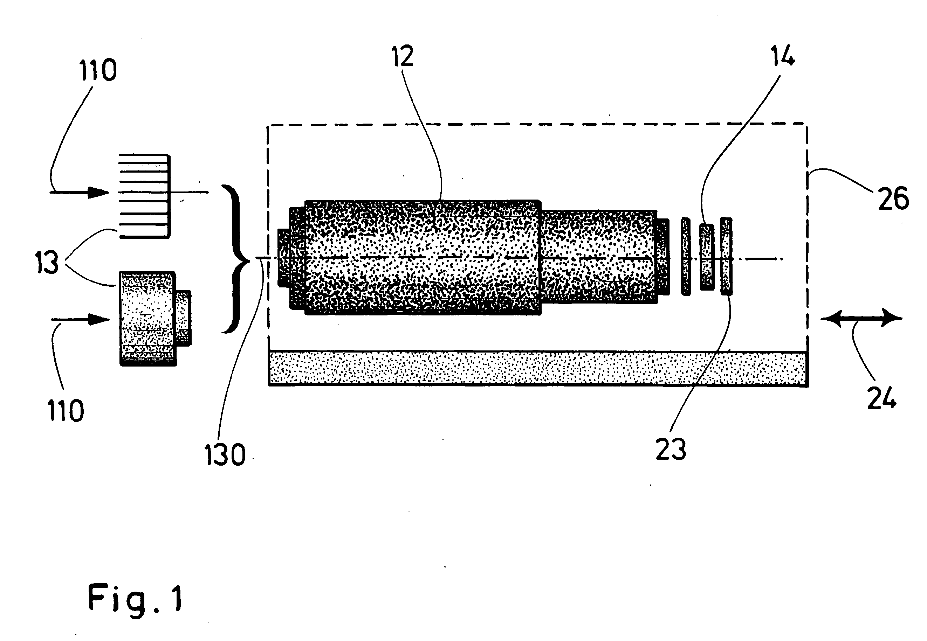

- Fig. 1: im wesentlichen in Form einer stark schematisierten Blockdarstellung die spektroskopische Einheit mit vorgeschalteter optischer Erfassungseinheit und nachgeschaltetem optisch-sensitivem Detektorelement und

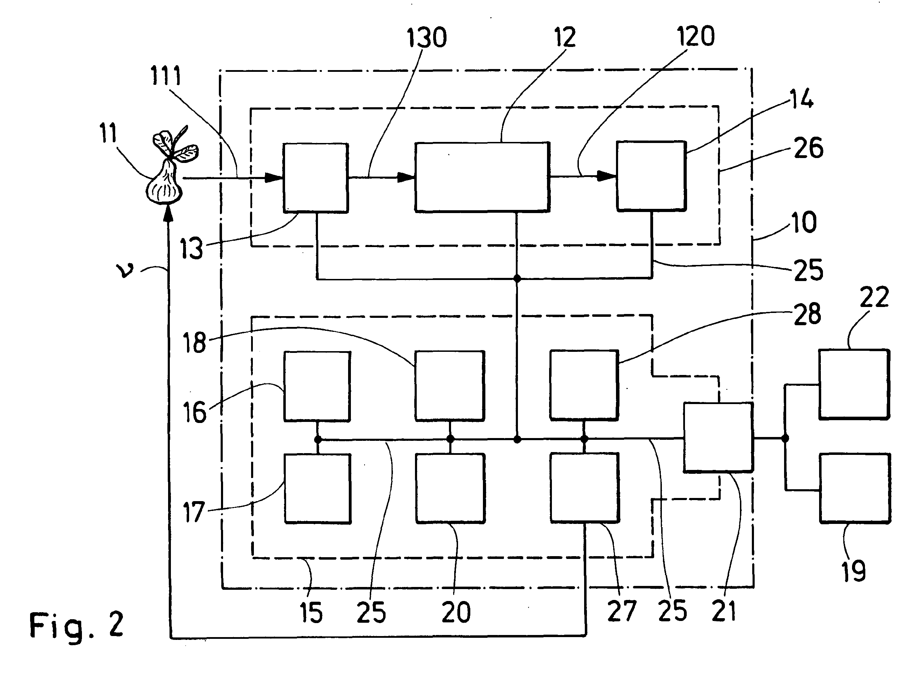

- Fig. 2: in einem Blockschaltbild den prinzipiellen Aufbau der Vorrichtung zur bildgebenden spektroskopischen Erfassung von von Gegenständen charakterisierenden Parametern in einer funktionsfähigen Grundkonfiguration im Zusammenwirken mit einer abgesetzt angeordneter Rechen- und/ oder Speichereinheit sowie einer peripheren Einrichtung, die bspw. Daten zur Steuerung der Vorrichtung von außen in die Vorrichtung leitet und/oder Daten von der Vorrichtung zur Steuerung nachgeschalteter Prozesse empfängt.

In Fig. 1 ist der Aufbau der spektrometrischen Einheit 12 im Zusammenwirken mit einer optischen Erfassungseinheit 13, hier dargestellt als Lichtwellenleiteroptik und als Linse bzw. Linsensystem, im Zusammenwirken mit einem optisch sensitiven Detektorelement 14 dargestellt. Die spektroskopische Einheit 12 ist bspw. eine solche, wie sie in der europäischen Patentschrift gem. der EP-B-0 635 138 beschrieben worden ist. Diese spektroskopische Einheit 12 ist im Hinblick auf den Aufbau und ihre Funktion der Fachwelt bekannt, so daß darauf an dieser Stelle nicht weiter eingegangen zu werden braucht.

Die Vorrichtung 10 eignet sich für die vielfältigsten analytischen und industriellen Anwendungen, bspw. im Fahrzeugbau für eine hochgenaue Farbbestimmung an Lackoberflächen von Kraftfahrzeugen, und auch zur Qualitätsendkontrolle bei der Herstellung von LEDs sowie Glühlampen und bspw. zur Ermittlung der Farbe und des Reifegrades von Agrarprodukten, bspw. von Obst, hier in Form einer Birne, vgl. Fig. 2, dargestellt.

Durch geeignete Beleuchtung des zu erfassenden Gegenstandes 11 reflektiert dieser Gegenstand 11 Licht, wobei das reflektierte Licht 110 auf an sich bekannte Weise auf das optische Erfassungssystem 13 gegeben wird. Vom optischen Erfassungssystem 13 gelangt das reflektierte Licht nunmehr als optisch gebündelter und ggf. kollimierter Strahl 130 als optische Information in die spektroskopische Einheit 12. In der spektroskopischen Einheit 12 wird ein Strahlenspektrum 120 gebildet, das auf das optisch sensitive Detektorelement 14 geleitet wird. Im Detektorelement 14 werden die optischen Signale in elektrische umgewandelt. Das Detektorelement 14 bzw. die Detektorelemente 14 sind wellenlängenselektiv ausgebildet bzw. werden geeignet ausgewählt, um bspw. speziell im UV-Bereich, im VIS-Bereich oder im NIR/MIR-Bereich zu arbeiten. Das optisch sensitive Detektorelement 14 bzw. die optisch sensitiven Detektorelemente 14 wird bzw. werden bspw. über einen Kühlwassereinlaß /-auslaß 24 mit Kühlwasser über eine Kühleinrichtung 23, die hier als Flüssigkeitswärmetauscher ausgebildet ist, gekühlt.

Die in Fig. 1 dargestellten Elemente der Vorrichtung 10 sind dort als optomechanische Einheit 26 dargestellt und zusammengefaßt. Diese optomechanische Einheit 26 findet sich in der erfindungsgemäßen Vorrichtung 10 gem. Fig. 2, auf die nunmehr Bezug genommen wird. In der Vorrichtung 10 ist als wesentliches Element neben der optomechanischen Einheit 26 eine elktronische Steuer- und Regeleinrichtung 15 vorgesehen, auf die zunächst unmittelbar Bezug genommen wird.

Es sei vorangestellt, daß die nachfolgende Beschreibung der elektronischen Steuer- und Regeleinheit 15 nur eine mögliche Ausgestaltung der Vorrichtung 10 mit den einzelnen Komponenten der elektronischen Steuer- und Regeleinrichtung 15 darstellt. Weitere Komponenten sind in der elektronischen Steuer- und Regeleinheit 15 vorsehbar, wenn dieses die spezielle Messungs-, Überwachungs- und Köntrollaufgabe der Vorrichtung 10 im Rahmen der Erfassung von von Gegenständen charakterisierenden Parametern erfordert. Die elektronische Steuer- und Regeleinrichtung 15 umfaßt eine Programmeinheit 16, in die ein anwenderspezifischer Steuer- und/oder Regelalgorithmus einschreibbar ist, bspw. über eine periphere Einrichtung 22, oder aber auf direktem Wege durch entsprechende Verbindung mit der Programmeinheit 16, was hier im einzelnen nicht dargestellt ist.

Darüber hinaus umfaßt die elektronische Steuer- und Regeleinrichtung 15 wenigstens eine Speichereinheit 17 sowie wenigstens eine Recheneinheit 18 und eine Anzeigeeinheit 20, die als Bildschirm oder als sogen. "Touch Screen" ausgebildet sein kann.

Die Steuer- und Regeleinrichtung für den Betrieb der Kühleinrichtung 23 ist hier aus Vereinfachungsgründen weggelassen worden, der elektronische Steuerteil für diese Funktion kann aber von der elektronischen Steuer- und Regeleinrichtung 15 ebenfalls durchgeführt werden.

Teil der elektronischen Steuer- und Regeleinrichtung 15 ist schließlich eine Schnittstelle 21, von der hier aus Vereinfachungsgründen lediglich eine dargestellt ist. Es kann eine Mehrzahl von Schnittstellen 21 in der Vorrichtung 10 vorgesehen sein, die nach unterschiedlichen Schnittstellenbedingungen konfiguriert sind und entsprechend der Konfiguration unterschiedlich arbeiten.

Alle Elemente der Vorrichtung 10 sind über einen Daten- und Steuerbus 25 miteinander verbunden. Da ein Daten- und Steuerbus dem Fachmann in bezug auf Aufbau und Funktion bekannt ist, spezielle Funktionen des Daten- und Steuerbusses 25 hier im Zusammenwirken mit der Vorrichtung 10 nicht vorkommen, ist ein weiteres Eingehen auf den Daten- und Steuerbus 25 nicht erforderlich. Gem, der Erfindung ist die elektronische Steuer- und Regeleinrichtung 15 mit der optischen Erfassungseinrichtung 13, mit der spektrographischen Einheit 12 sowie dem Detektorelement 14 über den Daten- und Steuerbus verbunden, und zwar in bezug auf die elektronische Verknüpfung der spektroskopischen Erfassungsfunktion der Vorrichtung 10 zu deren Steuerung und/oder Regelung.

Die Anpassung an die erfindungsgemäße Erfassungsaufgabe der Vorrichtung 10 reduziert sich darauf, daß in die Programmeinheit 16 der für die gewollte Anwendung spezifische Steuer- und/oder Regelalgorithmus einschreibbar ist, und zwar in die Speichereinheit 17. Diese Speichereinheit 17 kann entweder ganz oder teilweise in Form eines "field programmable gate array" FPGA ausgebildet sein. Der Anwender der erfindungsgemäßen Vorrichtung 10 kann somit mittels einer einfachen Programmiertechnik den von ihm für die spezielle Anwendung erstellten, gewünschten Steuer- und/oder Regelalgorithmus einschreiben. Auf diesen Vorgang reduziert sich seine Tätigkeit im Zusammenhang mit dem gewünschten, spezifischen Einsatz der Vorrichtung 10 für die von ihm gewünschten Zwecke.

Auch ist über diesen Steuer- und/oder Regelalgorithmus die individuelle Anpassung an die verwendeten optisch-sensitiven Detektorelemente 14 möglich, d.h. die Daten bzw. Parameter, die das optisch sensitive Detektorelement 14 definieren, können im Zuge des Einschreibens des Regelalgorithmus ebenfalls für die Vorrichtung 10 bzw. deren bestimmungsgemäßen Betrieb definiert und festgelegt werden.

Mittels der Recheneinheit 18 im Zusammenwirkenmit der Programmeinheit 16 sowie der Speichereinheit 17 können die vom optisch sensitiven Detektorelement 14 erfaßten Daten über den Daten- und Steuerbus 25 direkt gelesen und quasi in Echtzeit von der elektronischen Steuer- und Regeleinrichtung 15 verarbeitet werden. Da diese Verarbeitung der Daten hohen Anforderungen im Hinblick auf die Geschwindigkeit, die Komplexität und die Variabilität genügen muß, ist die besagte, als "field programmable gate array" FPGA ausgebildete Speichereinheit 17 ganz besonders geeignet, diesen Bedingungen gerecht zu werden.

Die elektronische Steuer- und Regeleinrichtung 15 ist auch für die Kommunikation der Vorrichtung 10 mit peripheren Einrichtungen 22 sowie peripheren Rechen- und Speichereinheiten 19 verantwortlich, wobei hier lediglich aus Darstellungsgründen von einer peripheren Einrichtung 22 und einer peripheren Rechen- und/oder Speichereinheit 19 ausgegangen wird. Die periphere Rechen- und/oder Speichereinheit 19 steht für eine beliebige Mehrzahl von Rechen- und/oder Speichereinheiten 19, die mit der Vorrichtung 10 kommunizieren können, was gleichermaßen auch für eine Mehrzahl von sonstigen peripheren Einrichtungen 22 wie äußeren Überwachungseinrichtungen und äußeren Steuereinrichtungen gilt, wobei die mit der Vorrichtung 10 über die Schnittstelle 21 gelieferten Daten z.B. äußere Steuer- und Regelvorgänge bewirken können.

Über die Anzeigeeinheit 20, die bspw. als Display, bspw. in Form eines "Touch Screens", ausgebildet sein kann, oder in Form eines Monitors, können alle die Vorrichtung 10 betreffenden Parameter wie Steuer-, Regel- und Datenparameter dargestellt und somit optisch überwacht, aber auch selbst eingegeben und geändert werden. Dieses gilt nicht nur für die Parameter der einzelnen Komponenten der elektronischen Steuer- und Regeleinrichtung 15, sondern auch für das optisch sensitive Detektorelement, die spektrographische Einheit 12, und auch für die optische Erfassungseinheit 13.

Vom Anwender der Vorrichtung ist es über den einzuschreibenden Steuer- und/oder Regelalgorithmus ebenfalls möglich, auch eine Steuerung- und/oder Regelung der optischen Komponente der optischen Erfassungseinheit 13 zu bewirken. Dieses gilt insbesondere auch für die Steuerung eines Objektivs und ggf. Blenden der optischen Erfassungseinheit 13 und die Zuschaltung und Abschaltung von Lichtwellenleitern. Schließlich ist eine Beleuchtungseinheit 27 sowie eine Antriebseinheit 28 als Teil der elektronischen Steuer- und Regeleinrichtung 15 vorgesehen. Mit der Beleuchtungseinheit 27 wird der zu erfassende Gegenstand 11 geeignet beleuchtet, vgl. die Verbindungslinie 29, mit der der Gegenstand 11 für den Erfassungsvorgang beleuchtet wird. Mittels der elektronischen Steuer- und Regeleinrichtung 15 wird eine Überwachung, Steuerung und Darstellung aller die Beleuchtung betreffenden wichtigen Parameter erzeugt. Die Sicherstellung einer für die vorrichtungsgemäßen Zwecke hochleistungsfähigen Beleuchtung ist von entscheidender Bedeutung für die bestimmungsgemäße Funktion der Vorrichtung 10.

Mittels der Antriebseinheit 28, die ebenfalls Teil der elektronischen Steuer- und Regeleinrichtung 15 ist, kann die Vorrichtung 10 für die Steuerung von Stellgliedern, Verfahrtischen und anderen Antrieben konfiguriert werden.

Die spektrographische Einheit 12 und/oder die optische Erfassungseinheit 13 und/oder die Detektoreinheit 14 und/oder die Steuer- und Regeleinrichtung 15 sowie alle anderen Komponenten der Vorrichtung 10, die hier nicht gesondert hervorgehoben worden sind, können als modulare Elemente ausgebildet sein. D.h., daß diese Elemente selbst modular ausgebildet sein können, d.h. aber auch, daß diese modularen Elemente in ihrer jeweiligen Gesamtheit jeweilige Module bilden, die einen flexiblen, effektiven Austausch der einzelnen Elemente gestatten und somit eine hohe Modularität der Vorrichtung 10 selbst gewährleisten können.

### Bezugszeichenliste

- 10: Vorrichtung
- 11: Gegenstand
- 110: reflektiertes Licht
- 12: spektrographische Einheit
- 120: Strahlenspektrum
- 13: optische Erfassungseinheit
- 130: optische Information
- 14: optisch-sensitives Detektorelement
- 15: elektronische Steuer- und Regeleinrichtung
- 16: Programmeinheit
- 17: Speichereinheit
- 18: Recheneinheit
- 19: periphere Rechen- und/oder Speichereinheit
- 20: Anzeigeeeinheit
- 21: Schnittstelle
- 22: periphere Einrichtung
- 23: Kühleinrichtung
- 24: Kühlwassereinlaß/-auslaß
- 25: Daten- und Steuerbus
- 26: optomechanische Einheit
- 27: Beleuchtungseinheit
- 28: Antriebseinheit
- 29: Verbindungslinie

## Patentansprüche

1. Vorrichtung (10) zur bildgebenden, spektroskopischen Erfassung von von Gegenständen (11) charakterisierenden Parametern, insbesondere von Vorgängen, Abläufen und Gegenständen und deren Analyse, umfassend wenigstens eine optische Erfassungseinheit (13), wenigstens eine spektrographische Einheit (12), wenigstens ein optisch-sensitives Detektorelement (14), das wellenlängenspezifisch und austauschbar ausgebildet ist, auf das ein in der spektroskopischen Einheit gebildetes Strahlenspektrum (120) geleitet wird, sowie eine elektronische Steuer- und Regeleinrichtung (15), mit der die Erfassungseinheit (13), die spektrographische Einheit (12) sowie das Detektorelement (14) in bezug auf die spektroskopische Erfassungsfunktion der Vorrichtung (10) zu deren Steuerung und/oder Regelung verknüpft sind, wobei die elektronische Steuer- und Regeleinheit (15) eine Programmeinheit (16) umfaßt, in die ein anwendungsspezifischer Steuer- und/oder Regelalgorithmus einschreibbar ist, und daß eine Speichereinheit (17) vorgesehen ist, die wenigstens teilweise in Form eines "field programmable gate array" FPGA ausgebildet ist, in das anwenderseitig der gewünschte Steuer- und/oder Regelalgorithmus für den bestimmungsgemäßen Betrieb der Vorrichtung sowie die Anpassung an das verwendete optisch-sensitive Detektorelement (14) einschreibbar ist.

2. Vorrichtung nach Anspruch 1, **dadurch gekennzeichnet, daß** die elektronische Steuer- und/oder Regeleinheit (15) eine Recheneinheit (18) umfaßt, in der wenigstens vom Detektorelement (14) gelieferte Daten aufbereitet und/oder komprimiert und/oder zur Weiterbearbeitung an von der Vorrichtung (10) abgesetzte Rechen- und/oder Speichereinheiten (19) geleitet werden.

3. Vorrichtung nach Anspruch 2, **dadurch gekennzeichnet, daß** die Recheneinheit (18) wenigstens teilweise Teil der Speichereinheit (17) ist.

4. Vorrichtung nach einem oder mehreren der Ansprüche 1 bis 3, **dadurch gekennzeichnet, daß** das Detektorelement (14) für die Erfassung von UV-Strahlen aus wenigstens einem CMOS-Element gebildet wird.

5. Vorrichtung nach einem oder mehreren der Ansprüche 1 bis 3, **dadurch gekennzeichnet, daß** das Detektorelement (14) für die Erfassung von NIR-Strahlen aus wenigstens einem HgCdTe-Element gebildet wird.

6. Vorrichtung nach einem oder mehreren der Ansprüche 1 bis 5, **dadurch gekennzeichnet, daß** diese eine Anzeigeeinheit (20) und/oder einen Monitor wenigstens zur Darstellung der Steuer-, Regel- und Datenparameter umfaßt.

7. Vorrichtung nach einem oder mehreren der Ansprüche 1 bis 6, **dadurch gekennzeichnet, daß** diese wenigstens eine Schnittstelle (21) aufweist, über die die Vorrichtung (10) in beiden Richtungen mit peripheren Einrichtungen (22) kommunizieren kann.

8. Vorrichtung nach einem oder mehreren der Ansprüche 1 bis 7, **dadurch gekennzeichnet, daß** wenigstens die spektrographische Einheit (12) und/oder die optische Erfassungseinheit (13) und/oder die Detektoreinheit (14) und/oder die Steuer- und Regeleinrichtung (15) als modulare Elemente ausgebildet sind.

## Claims

1. Device (10) for spectroscopically detecting parameters characterising objects (11) for emitting images, in particular routines, sequences and objects, and for analysing them, comprising at least one optical sensing unit (13), at least one spectrographic unit (12), at least one optically sensitive detector element (14) configured for specific wavelengths which can be changed and to which a radiation spectrum (120) formed in the spectroscopic unit is directed, as well as an electronic control and regulating system (15) to which the sensing unit (13), spectrographic unit (12) and the detector element (14) are linked for the purpose of the spectroscopic detection function of the device (10) as a means of controlling and/or regulating them, which electronic control and regulating system (15) has a programme unit (16) to which a control and/or regulating algorithm specific to an application can be written, and a memory unit (17) is provided which is provided at least partially in the form of a field programmable gate array FPGA to which the desired control and/or regulating algorithm for the prescribed operation of the device can be written by the user and an adaptation to whatever optically sensitive detector element (14) is used can be run.

2. Device as claimed in claim 1, **characterised in that** the electronic control and/or regulating system (15) has a computer unit (18) in which data supplied by at least the detector element (14) is processed and/or compressed and/or forwarded to computer and/or memory units (19) remote from the device (10) for additional processing.

3. Device as claimed in claim 2, **characterised in that** the computer unit (18) at least partially forms part of the memory unit (17).

4. Device as claimed in one or more of claims 1 to 3, **characterised in that** the detector element (14) is provided with at least one CMOS element for detecting UV radiation.

5. Device as claimed in one or more of claims 1 to 3, **characterised in that** the detector element (14) is provided with at least one HgCdTe element for detecting NIR radiation.

6. Device as claimed in one or more of claims 1 to 5, **characterised in that** it has a display unit (20) and/or a monitor for displaying at least the control, regulating ad data parameters.

7. Device as claimed in one or more of claims 1 to 6, **characterised in that** it has at least one interface (21) across which the device (10) is able to communicate with peripheral units (22) in both directions.

8. Device as claimed in one or more of claims 1 to 7, **characterised in that** at least the spectrographic unit (12) and/or the optical detection unit (14) and/or the control and regulating system (15) are provided in the form of modular elements.

## Revendications

1. Dispositif (10) destiné à l'acquisition spectroscopique de paramètres caractéristiques d'articles (11), plus particulièrement à l'acquisition de processus, d'évolutions et d'articles ainsi qu'à leurs analyses respectives, pour en représenter les résultats sous forme d'image, ledit dispositif comprenant au moins une unité d'acquisition optique (13), au moins une unité spectrographique (12), au moins un élément de détection optiquement sensible (14) qui est interchangeable et spécifique quant à la longueur d'onde, ledit élément de détection recevant un spectre de rayons (120) engendré dans l'unité spectroscopique, ainsi qu'un dispositif de commande et de réglage électronique (15) relié à l'unité d'acquisition (13), à l'unité spectrographique (12) ainsi qu'à l'élément de détection (14) pour ainsi commander et/ou régler la fonction de l'acquisition spectroscopique du dispositif (10), l'unité de commande et de réglage électronique (15) comprenant une unité de programme (16) dans laquelle un algorithme de commande et/ou de réglage spécifique à l'application peut être inscrit, et qu'il est prévu une unité de mémoire (17) qui est au moins partiellement réalisée sous forme d'un réseau de portes programmables ("field programmable gate array", FPGA) dans lequel l'algorithme de commande et/ou de réglage souhaité par l'utilisateur peut être inscrit pour ainsi assurer que le dispositif fonctionne conformément à sa finalité et pour effectuer une adaptation au type d'élément de détection optiquement sensible (14) mis en oeuvre.

2. Dispositif selon la revendication 1, **caractérisé en ce que** l'unité de commande et/ou de réglage électronique (15) comprend une unité de calcul (18) au sein de laquelle au moins les données fournies par l'élément de détection (14) sont traitées et/ou comprimées et/ou transmises pour un traitement ultérieur à des unités de calcul et/ou de mémoire (19) ne faisant pas partie du dispositif (10).

3. Dispositif selon la revendication 2, **caractérisé en ce que** l'unité de calcul (18) fait au moins partiellement partie de l'unité de mémoire (17).

4. Dispositif selon une ou plusieurs des revendications 1 à 3, **caractérisé en ce que** l'élément de détection (14) destiné à l'acquisition de rayons UV est constitué par au moins un élément CMOS.

5. Dispositif selon une ou plusieurs des revendications 1 à 3, **caractérisé en ce que** l'élément de détection (14) destiné à l'acquisition de rayons NIR est constitué par au moins un élément HgCdTe.

6. Dispositif selon une ou plusieurs des revendications 1 à 5, **caractérisé en ce qu'**il comprend une unité d'affichage (20) et/ou un écran destinés à la représentation au moins des paramètres de commande, de réglage et de données.

7. Dispositif selon une ou plusieurs des revendications 1 à 6, **caractérisé en ce qu'**il comporte au moins une interface (21) permettant au dispositif (10) de communiquer de façon bidirectionnelle avec des installations périphériques (22).

8. Dispositif selon une ou plusieurs des revendications 1 à 7, **caractérisé en ce qu'**au moins l'unité spectrographique (12) et/ou l'unité d'acquisition optique (13) et/ou l'unité de détection (14) et/ou le dispositif de commande et de réglage (15) sont réalisés sous forme d'éléments modulaires.
